(19) Europäisches Patentamt
European Patent Office
Office européen des brevets

(11) **EP 3 599 468 B1**

(12) **FASCICULE DE BREVET EUROPEEN**

(45) Date de publication et mention de la délivrance du brevet:
**01.09.2021 Bulletin 2021/35**

(51) Int Cl.:
***G01P 3/489*** *(2006.01)*    ***B60W 40/105*** *(2012.01)*
***B60L 15/20*** *(2006.01)*    ***B60L 3/12*** *(2006.01)*

(21) Numéro de dépôt: **19188082.2**

(22) Date de dépôt: **24.07.2019**

(54) **PROCÉDÉ ET DISPOSITIF DE PILOTAGE D'UN MOTEUR ÉLECTRIQUE DE TRACTION, PROGRAMME D'ORDINATEUR, CHAÎNE DE TRACTION ET VÉHICULE ASSOCIÉS**

STEUERVERFAHREN UND -VORRICHTUNG FÜR ELEKTRISCHEN ZUGMOTOR, SOWIE ZUGEHÖRIGES SOFTWAREPROGRAMM, TRAKTIONSSYSTEM UND FAHRZEUG

CONTROL METHOD AND DEVICE FOR AN ELECTRIC TRACTION MOTOR, ASSOCIATED COMPUTER PROGRAM, TRACTION SYSTEM AND VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2018 FR 1856860**

(43) Date de publication de la demande:
**29.01.2020 Bulletin 2020/05**

(73) Titulaire: **ALSTOM Transport Technologies 93400 Saint-Ouen (FR)**

(72) Inventeurs:
• **LEFEBVRE, Gaëtan 31800 SAINT-GAUDENS (FR)**
• **MICKIEWICZ, Vincent 65420 IBOS (FR)**
• **ALI-ABDALLAH, Ali 65000 TARBES (FR)**

(74) Mandataire: **Lavoix 2, place d'Estienne d'Orves 75441 Paris Cedex 09 (FR)**

(56) Documents cités:
**JP-A- S56 107 707     US-A1- 2004 122 616**

• **PARK GI-HYOUNG ET AL: "Automatic restarting methods of electric forklifts in the free running state", 2013 WORLD ELECTRIC VEHICLE SYMPOSIUM AND EXHIBITION (EVS27), IEEE, 17 novembre 2013 (2013-11-17), pages 1-8, XP032654201, DOI: 10.1109/EVS.2013.6914821**

**Description**

La présente invention concerne un procédé de pilotage d'au moins un moteur électrique de traction, chaque moteur électrique de traction étant embarqué dans un véhicule, tel qu'un véhicule ferroviaire. Le procédé de pilotage est mis en œuvre par un dispositif électronique de pilotage et comporte une étape pour engendrer une valeur initiale lors d'une réinitialisation du pilotage. Cette valeur de vitesse est calculée suivant un procédé de calcul. Une vitesse de déplacement du véhicule, utilisée par le procédé de calcul, est acquise via un capteur de géolocalisation par satellite.

L'invention concerne également un programme d'ordinateur comportant des instructions logicielles qui, lorsqu'elles sont exécutées par un système selon la demande, mettent en œuvre un tel procédé de pilotage.

L'invention concerne également un système de pilotage d'au moins un moteur électrique de traction, comprenant un dispositif électronique de pilotage, un dispositif électronique de calcul d'une vitesse et un capteur de géolocalisation par satellite, qui mesure mesure la vitesse de déplacement d'un véhicule.

L'invention concerne également une chaîne de traction pour un véhicule, la chaîne de traction comprenant au moins un moteur électrique de traction, et ce système électronique de pilotage.

L'invention concerne également un véhicule, tel qu'un véhicule roulant, par exemple un véhicule ferroviaire, comprenant une telle chaîne de traction. La chaine de traction est configurée pour provoquer un déplacement du véhicule.

L'invention s'applique au domaine des transports, en particulier du transport ferroviaire.

On connait de l'article titré «Automatic restarting methods of electric forklifts in the free running state» (EVS 27 International Battery, Hybrid and Fuel Cell Electric Vehicle Symposium, 2013), deux types de méthodes pour un redémarrage automatique des véhicules en marche libre : une méthode avec capteur de vitesse et une méthode sans capteur de vitesse.

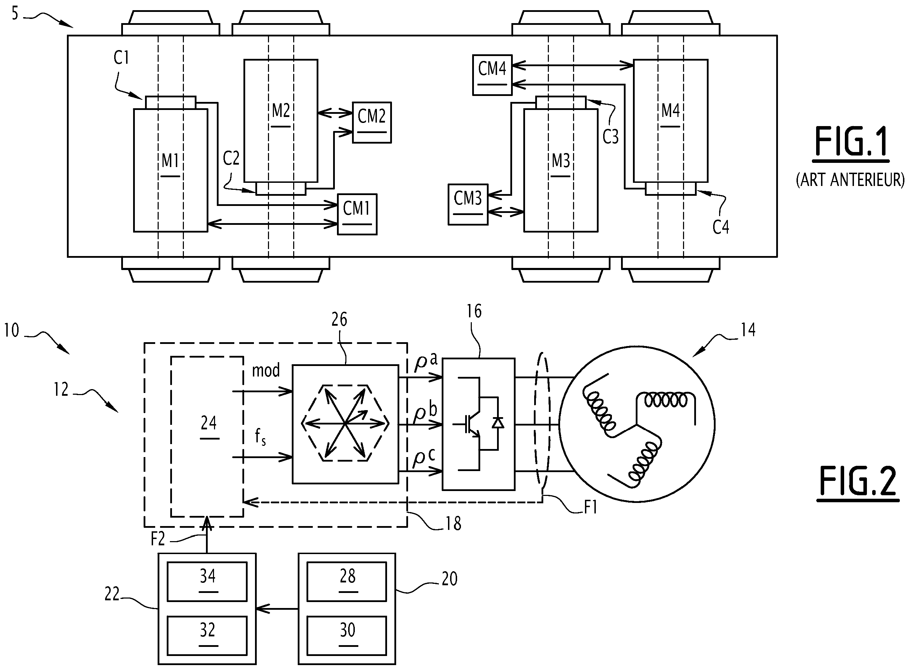

La figure 1 présente ainsi schématiquement un exemple de pilotage d'un moteur électrique d'un véhicule 10, tel qu'un véhicule ferroviaire, selon la méthode avec capteur de vitesse. Chaque moteur électrique de traction M1, M2, M3, M4 embarqué dans le véhicule 5 est équipé respectivement d'un capteur C1, C2, C3, C4 de vitesse de rotation et est piloté respectivement par un dispositif correspondant CM1, CM2, CM3, CM4 de commande du moteur à partir de la vitesse de rotation mesurée par le capteur C1, C2, C3, C4. Le courant et le flux associés au moteur M1, M2, M3, M4 peuvent alors être calculés avec précision grâce à la vitesse de rotation mesurée par le capteur de vitesse C1, C2, C3, C4. Ce courant et ce flux sont ensuite utilisés pour réguler la vitesse de rotation du moteur M1, M2, M3, M4 par exemple lors d'un redémarrage.

Cependant, les coûts de maintenance des moteurs électrique de traction sont plus élevés de par la présence des capteurs de vitesse C1, C2, C3, C4.

Dans le cas de la méthode sans capteur de vitesse, des mesures d'un courant circulant au travers d'un convertisseur d'énergie électrique alimentant électriquement le moteur servent à calculer la vitesse de rotation du moteur. Le convertisseur d'énergie électrique, tel qu'un onduleur, est connecté au moteur de traction et est configuré pour alimenter électriquement le moteur à partir d'une source d'énergie électrique. Quand le convertisseur d'énergie électrique est actif, il est apte à offrir une telle mesure précitée de courant qui permet de déterminer la vitesse de rotation du moteur.

Toutefois, en cas d'anomalie ou en cas d'une marche sur l'erre, l'erre désignant une vitesse résiduelle lorsqu'il n'y a plus de propulsion, ce courant circulant à travers le convertisseur d'énergie électrique, et utilisé pour déterminer la vitesse de rotation du moteur, est susceptible de présenter une valeur sensiblement nulle. Une telle situation est alors susceptible d'engendrer une erreur lors de la détermination de la vitesse de rotation du moteur, et d'engendrer ensuite un à-coup de couple important lors de la reprise de traction.

JP S56 107707 A décrit un procédé de calcul de la vitesse de rotation d'un moteur électrique de traction d'un véhicule, le moteur de traction étant piloté par un variateur de fréquence en fonction d'une vitesse de rotation estimée du moteur.

US 2004/122616 A1 concerne également un procédé d'estimation de la vitesse de rotation d'une roue couplée mécaniquement à un moteur électrique.

« Automatic restarting methods of electric forklifts in the free running state » - Park et al concerne deux méthodes de redémarrage automatique des véhicules en marche libre, à savoir une méthode avec capteur de vitesse et une méthode sans capteur de vitesse.

Des solutions proposées dans l'état de la technique consistent alors à conserver le capteur de vitesse pour initialiser la vitesse du moteur électrique de traction lors de la reprise de traction, ou à ralentir la régulation afin que le régime transitoire ne produise pas d'à-coup de couple trop important. Or, ces solutions ne sont pas satisfaisantes soit à cause de leur coût, soit à cause d'à-coups de couple persistant.

La présente invention a pour but de proposer un procédé de calcul d'une vitesse de rotation d'un moteur électrique de traction permettant de calculer plus efficacement la vitesse de rotation, en remédiant à ces inconvénients de l'état de la technique, notamment en l'absence d'un capteur de vitesse de rotation du moteur.

A cet effet, l'invention concerne un procédé de pilotage d'au moins un moteur électrique de traction, selon la revendication 1 ou 2.

L'invention a également pour objet un programme d'ordinateur selon la revendication 6.

L'invention a également pour objet un système comprenant un dispositif électronique de pilotage d'au moins un moteur électrique de traction, un dispositif électronique de calcul d'une vitesse et un capteur de vitesse, selon la revendication 3.

L'invention a également pour objet une chaine de traction pour un véhicule, selon la revendication 4.

L'invention a également pour objet un véhicule selon la revendication 5.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1, déjà décrite, illustre un exemple de pilotage, selon l'état de la technique, du moteur électrique du véhicule avec capteur de vitesse de rotation du moteur électrique ;
- la figure 2 est une représentation schématique d'un véhicule de transport, tel qu'un véhicule ferroviaire, comprenant une chaîne de traction, la chaîne de traction comportant au moins un moteur électrique et un convertisseur d'énergie électrique relié au moteur électrique, un dispositif électronique de commande du convertisseur d'énergie électrique, ainsi qu'un dispositif électronique de calcul d'une vitesse de rotation de chaque moteur et un dispositif électronique de pilotage de chaque moteur ;
- la figure 3 est une représentation schématique du véhicule de transport selon l'invention, équipé de plusieurs moteurs électriques pilotés à partir de la vitesse de déplacement du véhicule, la vitesse de déplacement étant obtenue à partir d'un capteur de vitesse du véhicule ;
- la figure 4, qui ne correspond pas à l'invention, est une vue analogue à celle de la figure 3, la vitesse de déplacement étant obtenue à partir de la vitesse de rotation d'un moteur électrique donné ; et
- la figure 5 est un organigramme d'un procédé, selon l'invention, de calcul d'une vitesse de rotation d'au moins un moteur électrique de traction.

Sur la figure 2, un véhicule de transport 10 comprend au moins une chaîne de traction 12. Autrement dit, le véhicule de transport 10 comprend N chaîne(s) de traction 12, où N est un nombre entier supérieur ou égal à 1. Le véhicule de transport 10 est par exemple un véhicule roulant, tel qu'un véhicule ferroviaire.

La chaîne de traction 12 comporte au moins un moteur électrique 14 et au moins un convertisseur d'énergie électrique 16 connecté à un moteur électrique 14 respectif. La chaîne de traction 12 comporte au moins un dispositif électronique 18 de commande d'un convertisseur d'énergie électrique 16 respectif.

La chaîne de traction 12 comporte également un dispositif électronique 20 de calcul d'une vitesse de rotation de chaque moteur 14 et un dispositif électronique 22 de pilotage de chaque moteur 14. La vitesse de rotation est également appelée vitesse rotorique.

Le moteur électrique 14 est par exemple un moteur alternatif, tel qu'un moteur triphasé.

Le convertisseur d'énergie électrique 16 est configuré pour alimenter électriquement le moteur électrique à partir d'une source électrique, non représentée. Le convertisseur d'énergie électrique 16 comporte par exemple un onduleur. Le convertisseur d'énergie électrique 16 est par exemple un convertisseur bidirectionnel autorisant la circulation d'un courant depuis la source électrique vers le moteur 14, et également la circulation d'un courant depuis le moteur 14 vers la source électrique, par exemple lors d'une récupération d'énergie au freinage du véhicule 10.

Le dispositif électronique de commande 18 est configuré pour commander un convertisseur d'énergie électrique 16 respectif, et comprend une unité de commande 24 et une unité de modulation 26, l'unité de modulation 26 étant configurée pour générer des signaux en modulation de largeur d'impulsion, également appelés signaux MLI ou signaux PWM (de l'anglais *Pulse Width Modulation)*, notés $\rho_a$, $\rho_b$, $\rho_c$, dans l'exemple de la figure 2 où le moteur 14 est un moteur triphasé, ladite unité de commande 24 étant configurée pour commander ladite unité de modulation 26 via un taux de modulation mod et une fréquence de glissement $f_s$, ou encore via une fréquence de commutation et un rapport cyclique.

Le dispositif électronique de calcul 20 est configuré pour calculer la vitesse de rotation de chaque moteur 14, et comprend un module d'acquisition 28 configuré pour acquérir une vitesse V de déplacement du véhicule 10, et un module de calcul 30 configuré pour calculer une vitesse de rotation du moteur de traction 14 correspondant en fonction de la vitesse V de déplacement du véhicule 10.

Par vitesse de déplacement du véhicule 10, on entend la vitesse suivant la direction selon laquelle la ou chaque chaine de traction 12 est apte à provoquer un déplacement du véhicule 10, également appelée direction de déplacement. Lorsque le véhicule de transport 10 est un véhicule roulant comportant une ou plusieurs roues 31, la direction de déplacement correspond par exemple à la direction suivie par une bande de roulement de chaque roue 31.

Dans l'exemple de la figure 2, le dispositif électronique de calcul 20 comprend une unité de traitement d'informations formée par exemple d'une mémoire et d'un processeur associé à la mémoire, non représentés.

Dans l'exemple de la figure 2, le module d'acquisition 28 et le module de calcul 30 sont réalisés chacun sous forme d'un logiciel, ou d'une brique logicielle, exécutable par le processeur. La mémoire du dispositif électronique de calcul 20 est alors apte à stocker un logiciel d'acquisition de la vitesse V de déplacement du véhicule 10 et un logiciel de calcul de la vitesse de rotation du moteur de traction 14 correspondant en fonction de la vitesse V de déplacement du véhicule 10. Le processeur est alors apte à exécuter chacun des logiciels parmi le logiciel d'acquisition et le logiciel de calcul.

En variante non représentée, le module d'acquisition 28 et le module de calcul 30 sont réalisés chacun sous forme d'un composant logique programmable, tel qu'un FPGA (de l'anglais *Field Programmable Gate Array),* un DSP (de l'anglais *Digital Signal Processor),* ou encore sous forme d'un circuit intégré dédié, tel qu'un ASIC (de l'anglais *Application Specific Integrated Circuit).*

Lorsque le dispositif électronique de calcul 20 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est, par exemple, un médium apte à mémoriser des instructions électroniques et à être couplé à un bus d'un système informatique. A titre d'exemple, le support lisible est une disquette ou disque souple (de l'anglais *Floppy Disk),* un disque optique, un CD-ROM, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le dispositif électronique de pilotage 22 est configuré pour piloter chaque moteur 14, et est relié au dispositif électronique de calcul 20. Le dispositif électronique de pilotage 22 comprend un module de réception 32 configuré pour recevoir, de la part du dispositif électronique de calcul 20, une vitesse de rotation du moteur électrique de traction 14, et un module de génération 34 configuré pour engendrer une valeur initiale lors d'une réinitialisation du pilotage du moteur à partir de ladite vitesse de rotation du moteur électrique de traction.

Dans l'exemple de la figure 2, le dispositif électronique de pilotage 22 comprend une unité de traitement d'informations formée par exemple d'une mémoire et d'un processeur associé à la mémoire, non représentés.

Dans l'exemple de la figure 2, le module de réception 32 et le module de génération 34 sont réalisés chacun sous forme d'un logiciel, ou d'une brique logicielle, exécutable par le processeur. La mémoire du dispositif électronique de pilotage 22 est alors apte à stocker un logiciel de réception, de la part du dispositif électronique de calcul 20, d'une vitesse de rotation du moteur électrique de traction 14 et un logiciel de génération pour engendrer une valeur initiale lors d'une réinitialisation du pilotage du moteur à partir de ladite vitesse de rotation du moteur électrique de traction. Le processeur est alors apte à exécuter chacun des logiciels parmi le logiciel de réception et le logiciel de génération.

En variante non représentée, le module de réception 32 et le module de génération 34 sont réalisés chacun sous forme d'un composant logique programmable, tel qu'un FPGA (de l'anglais *Field Programmable Gate Array),* un DSP (de l'anglais *Digital Signal Processor),* ou encore sous forme d'un circuit intégré dédié, tel qu'un ASIC (de l'anglais *Application Specific Integrated Circuit).*

Lorsque le dispositif électronique de pilotage 22 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est, par exemple, un médium apte à mémoriser des instructions électroniques et à être couplé à un bus d'un système informatique. A titre d'exemple, le support lisible est une disquette ou disque souple (de l'anglais *Floppy Disk),* un disque optique, un CD-ROM, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

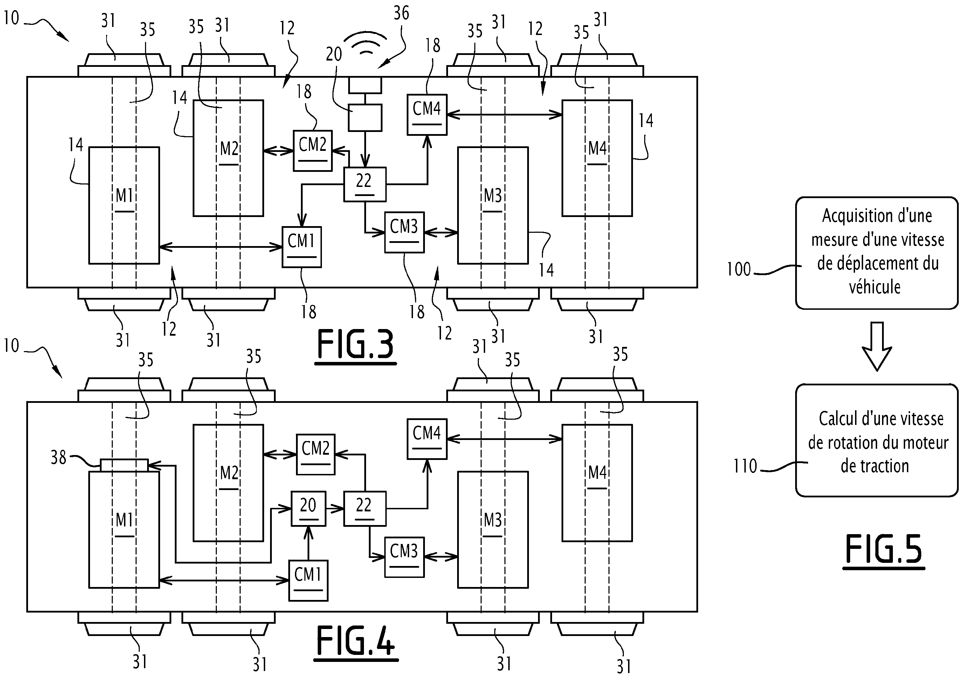

Dans l'exemple de la figure 3, le nombre N de chaines de traction 12 est égal à 4, chaque chaine de traction 12 comportant un moteur électrique 14 respectif. Les quatre moteurs électriques de traction 14 sont également notés respectivement M1, M2, M3, M4, et les quatre dispositifs électroniques de commande 18 sont également notés respectivement CM1, CM2, CM3, CM4. Dans cet exemple, chaque moteur électrique de traction M1, M2, M3, M4 est couplé mécaniquement à un essieu 35 respectif, à raison d'un moteur électrique de traction 14 par essieu 35 au maximum. La direction de déplacement est alors par exemple sensiblement perpendiculaire à l'essieu 35. Dans l'exemple de la figure 3, l'homme du métier observera que les convertisseurs d'énergie électrique 16 n'ont pas été représentés par souci de simplification du dessin.

Dans l'exemple de la figure 3, le véhicule de transport 10 comprend un unique dispositif électronique de pilotage 22 pour les N chaines de traction 12, avec N supérieur à 1. Dans cet exemple, le dispositif électronique de pilotage 22 est alors commun à plusieurs chaines de traction 12 distinctes.

Le véhicule de transport 10 comprend également un capteur de géolocalisation par satellite 36 qui mesure la vitesse V de déplacement dudit véhicule.

La figure 4, qui ne correspond pas à l'invention, est une vue analogue à celle de la figure 3, où la vitesse de déplacement est, selon une variante de réalisation, obtenue à partir de la vitesse de rotation d'un moteur électrique donné, en particulier d'un moteur électrique de traction 14 autre que l'au moins un moteur électrique de traction 14 pour lequel la vitesse de rotation est calculée. Selon cette variante de réalisation, le module d'acquisition 28 est configuré pour acquérir la vitesse V de déplacement du véhicule 10 via un capteur 38 de vitesse de rotation dudit autre moteur électrique de traction 14. Dans l'exemple de la figure 4, ledit autre moteur électrique de traction 14 muni du capteur de vitesse de rotation 38 est le moteur électrique M1.

Alternativement encore, ledit autre moteur électrique de traction 14 n'est pas muni d'un capteur de vitesse de rotation, mais n'est pas sur l'erre volontairement, c'est-à-dire que le courant circulant à travers le convertisseur d'énergie électrique 16 (non représenté), relié audit autre moteur électrique de traction 14, n'est pas nul, et ainsi apte à servir au calcul de la vitesse de rotation dudit autre moteur électrique 14.

Selon la variante de la figure 4, ou encore selon la variante précitée, le module de calcul 30 est alors configuré pour calculer la vitesse de rotation pour chaque moteur de traction M2, M3, M4 autre que le moteur 14, M1 pour lequel sa vitesse de rotation est mesurée et ensuite utilisée pour obtenir la vitesse V de déplacement du véhicule 10.

Le dispositif électronique de calcul 20 est ainsi, sur la figure 4, relié d'une part au capteur de vitesse de rotation 38 du moteur électrique M1, et d'autre part au dispositif électronique de commande 18, CM1 et au dispositif électronique de pilotage 22.

Le capteur de mesure 36 selon l'invention est un capteur de géolocalisation par satellite, tel qu'un capteur GPS («Global Positioning System» selon une terminologie anglo-saxonne) ou un capteur Galliléo.

Le fonctionnement du dispositif électronique de calcul 20 et celui du dispositif électronique de pilotage 22 vont être à présent expliqués.

Sur la figure 2, la mesure des courants circulant à travers le convertisseur d'énergie électrique 16 est communiquée au dispositif de commande 18, plus précisément à l'unité de commande 24 au sein du dispositif de commande 18, comme indiqué par la flèche F1, afin d'être pris en compte dans le calcul de la vitesse de rotation du moteur électrique 14 qui sert à délivrer des commandes par rapport à la régulation du fonctionnement du moteur électrique 14. Ladite régulation est commandée par l'unité de commande 24, et réalisée par l'intermédiaire de l'unité de modulation 26 et le convertisseur d'énergie électrique 16.

Comme illustré sur la figure 3, le module d'acquisition 28 reçoit, de la part du capteur de mesure 36, des données relatives à la vitesse V de déplacement du véhicule 10. Ensuite, le module de calcul 30 détermine la vitesse de rotation d'au moins un moteur électrique considéré M1, M2, M3, M4 à partir des données relatives à la vitesse V de déplacement du véhicule 10, par exemple à partir la vitesse de déplacement V elle-même. Ladite vitesse de rotation d'au moins un moteur électrique M1, M2, M3, M4 ainsi calculée est ensuite transmise par le dispositif électronique de calcul 20 au dispositif électronique de pilotage 22, le cas échéant est enregistrée dans une mémoire électronique (non représentée) dudit dispositif électronique de pilotage 22. Régulièrement ou de manière asynchrone, ledit dispositif électronique de pilotage 22 transmet l'information de vitesse de rotation de chaque moteur électrique de traction M1, M2, M3, M4 aux dispositifs de commande CM1, CM2, CM3, CM4 correspondant à chacun de ces moteurs électriques M1, M2, M3, M4. Chaque dispositif de commande CM1, CM2, CM3, CM4 est alors apte ensuite à envoyer une commande correspondante pour réguler la vitesse de rotation du moteur M1, M2, M3, M4 correspondant, et en particulier lors d'un redémarrage du moteur électrique M1, M2, M3, M4 pour initialiser la vitesse dudit moteur électrique M1, M2, M3, M4.

Selon l'invention, le module de génération 34 engendre une valeur initiale lors d'une réinitialisation du pilotage du moteur M1, M2, M3, M4 à partir de ladite vitesse de rotation du moteur électrique de traction, préalablement reçue du dispositif électronique de calcul 20, et la transmet ensuite au dispositif de commande CM1, CM2, CM3, CM4 correspondant du moteur électrique M1, M2, M3, M4.

Le calcul de la vitesse de rotation du moteur 14 en fonction de la vitesse du véhicule 10, est par exemple effectué en fonction d'un diamètre $D_i$, typiquement exprimé en mètres, de la roue 31 de l'essieu 35 couplé au moteur électrique Mi correspondant, où i est un indice entier compris entre 1 et N, par exemple égal à 1, 2, 3 ou 4 dans l'exemple des figures 3 et 4. Le calcul de la vitesse de rotation du moteur 14 dépend par exemple également d'un rapport de transmission $r_i$ entre ladite roue 31 et ledit moteur électrique Mi, de sorte que $r_i$ soit positif si la vitesse dudit moteur électrique Mi est supérieure à la vitesse de ladite roue 31, et négatif dans le cas contraire.

La fréquence de rotation $f_{mi}$ dudit moteur Mi, typiquement exprimée en Hertz vérifie alors par exemple l'équation suivante, la vitesse V étant typiquement exprimée en mètres par seconde :

$$f_{mi} = \frac{1}{2\pi} \cdot \frac{V}{D_i/2} \cdot r_i \qquad (1)$$

Le rapport de transmission $r_i$ entre ladite roue 31 et ledit moteur électrique Mi est par exemple fixe, et la fréquence de rotation du moteur électrique $f_{mi}$, soit également la vitesse rotorique dudit moteur électrique Mi, est ainsi directement proportionnelle à la vitesse de déplacement V du véhicule 10.

La vitesse de rotation $v_{mi}$ dudit moteur Mi, typiquement exprimée en tours par minute, est alors par exemple obtenue via la relation suivante entre la fréquence de rotation $f_{mi}$ et la vitesse de rotation $v_{mi}$, à savoir :

$$v_{mi} = 60 \cdot f_{mi} . \qquad (2)$$

Selon la variante de la figure 4, qui ne correspond pas à l'invention, la vitesse de rotation d'un moteur électrique considéré M2, M3, M4 est calculée à partir de la vitesse de déplacement V qui est elle-même obtenue à partir de la vitesse de rotation d'un autre moteur électrique, tel que le moteur M1 sur la figure 4. La fréquence de rotation $f_{m1}$ du moteur électrique M1 est mesurée par le capteur de vitesse 38, puis transmise au dispositif électronique de calcul 20.

En variante encore, lorsque le moteur électrique M1 n'est pas sur l'erre, la fréquence de rotation $f_{m1}$ dudit moteur électrique M1 est également apte à être calculée par le dispositif de commande CM1 à partir d'une mesure du courant circulant à travers le convertisseur d'énergie électrique 16 correspondant, puis transmise au dispositif électronique de calcul 20.

Le module d'acquisition 28 reçoit alors ladite fréquence de rotation $f_{m1}$ , et le module de calcul 30 calcule ensuite la vitesse de rotation de l'autre moteur M2, M3, M4 correspondant en fonction de la fréquence de rotation $f_{m1}$ dudit moteur M1.

En supposant également, comme représenté sur la figure 4, que chaque moteur électrique de traction M1, M2, M3, M4 est positionné sur un essieu à raison d'un moteur électrique par essieu au maximum et en notant Di le diamètre des roues 31 couplées au moteur Mi, la fréquence de rotation $f_{mi}$ du moteur électrique Mi vérifie par exemple l'équation suivante :

$$f_{mi} = \frac{f_{m1}}{r_1} \cdot \frac{D_1}{D_i} \cdot r_i \qquad (3)$$

avec i égal à 2, 3 ou 4, $r_1$, $r_x$ indiquant respectivement les rapports de transmission des moteurs M1 et Mi, et $D_1$, $D_i$ indiquant respectivement les diamètres des roues 31 couplées aux moteurs M1 et Mi.

De même, la vitesse de rotation $v_{mi}$ dudit moteur Mi, typiquement exprimée en tours par minute, est obtenue selon l'équation suivante :

$$v_{mi} = 60 \cdot f_{mi} \qquad (4)$$

Ladite fréquence de rotation $f_{mi}$ d'au moins un moteur électrique M2, M3, M4 ainsi calculée est ensuite transmise par le dispositif électronique de calcul 20 au dispositif électronique de pilotage 22, le cas échéant est enregistrée dans une mémoire électronique (non représentée) dudit dispositif électronique de pilotage 22. Régulièrement ou de manière asynchrone, ledit dispositif électronique de pilotage 22 transmet l'information de vitesse de rotation de chaque moteur électrique de traction M2, M3, M4 aux dispositifs de commande CM2, CM3, CM4 correspondant à chacun de ces moteurs électriques M2, M3, M4. Chaque dispositif de commande CM2, CM3, CM4 est alors apte ensuite à envoyer une commande pour réguler la vitesse de rotation du moteur M2, M3, M4 correspondant, et en particulier lors d'un redémarrage du moteur électrique M2, M3, M4, pour initialiser la vitesse dudit moteur électrique M2, M3, M4.

En complément facultatif, le module de génération 34 engendre une valeur initiale lors d'une réinitialisation du pilotage du moteur M2, M3, M4 à partir de ladite vitesse de rotation du moteur électrique de traction reçue du dispositif électronique de calcul 20, et la transmet ensuite au dispositif de commande CM2, CM3, CM4 correspondant du moteur électrique M2, M3, M4.

La figure 5 représente un organigramme du procédé, selon l'invention, de calcul de la vitesse de rotation d'au moins un moteur électrique de traction 14.

Lors d'une étape initiale 100, le module d'acquisition 28 acquiert une mesure de la vitesse de déplacement V du véhicule 10. La mesure de la vitesse de déplacement V est par exemple acquise directement de la part du capteur de mesure 36. En variante, qui ne correspond pas à l'invention, la mesure de la vitesse de déplacement V est acquise indirectement à partir de la vitesse rotorique d'un autre moteur 14, cette vitesse rotorique étant alors par exemple obtenue de la part d'un capteur de vitesse rotorique 38 associé à cet autre moteur 14 ou bien de la part du dispositif de commande 18, CM1 associé à cet autre moteur 14.

Lors d'une étape suivante 110, le module de calcul 30 calcule la vitesse de rotation du moteur 14 considéré en fonction de la vitesse de déplacement V du véhicule 10, par exemple à l'aide de l'équation (2).

En complément, la vitesse de rotation du moteur 14, calculée régulièrement par le dispositif électronique de calcul 20, est ensuite transmise au dispositif électronique de pilotage 22, le cas échéant enregistrée dans le dispositif électronique de pilotage 22, pour la régulation du fonctionnement du moteur électrique 14 considéré.

En complément ou en variante, la vitesse de rotation du moteur 14 est calculée de manière asynchrone, par exemple en cas d'anomalie ou d'une marche sur l'erre dans lequel le dispositif de commande 18 associé au moteur 14 ne dispose plus des informations au niveau du moteur 14 lui-même qui permettent de calculer la vitesse rotorique du moteur 14.

Le procédé de calcul de la vitesse de rotation selon l'invention s'applique à tout moteur électrique, notamment à un moteur asynchrone sans capteur de vitesse, ou encore à un moteur synchrone.

Avec le procédé de calcul selon l'invention, il n'est alors plus nécessaire de mesurer la vitesse de rotation de chacun des moteurs électriques de traction, et il suffit de mesurer la vitesse de déplacement V du véhicule 10, telle qu'une vitesse linéaire dans le cas d'un véhicule ferroviaire, ou la vitesse de rotation d'un autre moteur 14 utilisé pour la traction/propulsion du véhicule 14, afin d'estimer la vitesse de rotation du moteur 14 considéré.

En outre, comme la mesure de la vitesse de déplacement V du véhicule 10 est par ailleurs généralement nécessaire au pilotage en tant que tel du véhicule 10, le procédé de calcul selon l'invention permet de supprimer un ou plusieurs capteurs de vitesse de rotorique, tout en conservant une commande efficace du moteur électrique 14 considéré.

On conçoit ainsi que le procédé et le dispositif électronique de calcul 20 selon l'invention permettent de calculer plus efficacement la vitesse de rotation du moteur 14, notamment en l'absence d'un capteur de vitesse de rotation du moteur.

## Revendications

1. Procédé de pilotage d'au moins un moteur électrique de traction (14), chaque moteur électrique de traction (14) étant embarqué dans un véhicule (10) tel qu'un véhicule ferroviaire,

   le procédé de pilotage étant mis en œuvre par un dispositif électronique de pilotage (22) et comportant une étape pour engendrer une valeur initiale lors d'une réinitialisation du pilotage du moteur à partir de la vitesse de rotation du moteur électrique de traction (14) calculée suivant un procédé de calcul d'une vitesse de rotation d'au moins un moteur électrique de traction (14), le procédé de calcul étant mis en œuvre par un dispositif électronique de calcul (20) et comportant les étapes suivantes :

   - acquisition (100) d'une mesure d'une vitesse de déplacement du véhicule (10), la vitesse (V) de déplacement du véhicule (10) étant acquise via un capteur (36) de mesure de la vitesse de déplacement dudit véhicule, le capteur de mesure (36) étant un capteur de géolocalisation par satellite ;
   - calcul (110) d'une vitesse de rotation du moteur électrique de traction (14) en fonction de la vitesse de déplacement du véhicule (10).

2. Procédé selon la revendication 1, dans lequel le véhicule (10) comporte des roues, et le moteur de traction (14) est configuré pour entrainer en rotation au moins une roue, et dans lequel le calcul de la vitesse de rotation du moteur de traction (14) est fonction de la vitesse (V) de déplacement du véhicule (10), d'un diamètre de la roue apte à être entrainée en rotation par ledit moteur de traction (14), et d'un rapport de transmission entre la vitesse du moteur (14) et la vitesse de la roue.

3. Système de pilotage d'au moins un moteur électrique de traction, comprenant

   - un dispositif électronique de pilotage (22);
   - un dispositif électronique de calcul (20) d'une vitesse; et
   - un capteur de mesure (36) de la vitesse de déplacement d'un véhicule;

   le dispositif électronique de pilotage (22) étant configuré pour le pilotage d'au moins un moteur électrique de traction (14), chaque moteur électrique de traction (14) étant embarqué dans un véhicule (10), tel qu'un véhicule ferroviaire, le dispositif électronique de pilotage (22) étant relié au dispositif électronique (20) de calcul d'une vitesse de rotation d'au moins un moteur de traction (14),
   le dispositif électronique de calcul (20) comprenant :

   + un module d'acquisition (28) configuré pour acquérir une vitesse de déplacement du véhicule (10), la vitesse (V) de déplacement du véhicule (10) étant acquise via le capteur (36) de mesure de la vitesse de déplacement dudit véhicule, le capteur de mesure (36) étant un capteur de géolocalisation par satellite ; et
   + un module de calcul (30) configuré pour calculer une vitesse de rotation du moteur électrique de traction (14) en fonction de la vitesse (V) de déplacement du véhicule (10) ;

   le dispositif électronique de pilotage (22) comprenant :

- un module de réception (32) configuré pour recevoir de la part du dispositif électronique de calcul (20) une vitesse de rotation du moteur électrique de traction (14) ; et
- un module de génération (34) configuré pour engendrer une valeur initiale lors d'une réinitialisation du pilotage du moteur (14) à partir de ladite vitesse de rotation du moteur électrique de traction (14), calculée par le dispositif électronique de calcul (20).

4. Chaine de traction (12) pour un véhicule (10), tel qu'un véhicule ferroviaire, la chaine de traction (12) comprenant :

- au moins un moteur électrique de traction (14) embarqué dans le véhicule (10), et
- le système selon la revendication 3.

5. Véhicule (10), tel qu'un véhicule roulant, par exemple un véhicule ferroviaire, comprenant une chaine de traction (12) selon la revendication 4.

6. Programme d'ordinateur comportant des instructions logicielles qui, lorsqu'elles sont exécutées par le système selon la revendication 3, mettent en œuvre un procédé selon l'une quelconque des revendications 1 ou 2.

**Patentansprüche**

1. Verfahren zur Steuerung von mindestens einem Traktionselektromotor (14), wobei jeder Traktionselektromotor (14) in einem Fahrzeug (10), wie insbesondere einem Schienenfahrzeug, untergebracht ist, wobei das Verfahren zur Steuerung durch eine elektronische Steuervorrichtung (22) durchgeführt wird und einen Schritt zum Erzeugen eines Anfangswerts bei einem Zurücksetzen der Steuerung des Motors ausgehend von der gemäß einem Verfahren zur Berechnung einer Drehzahl von mindestens einem Traktionselektromotor (14) berechneten Drehzahl des Traktionselektromotors (14) aufweist, wobei das Verfahren zur Berechnung durch eine elektronische Vorrichtung zur Berechnung (20) durchgeführt wird und die folgenden Schritte aufweist:

- Erlangen (100) einer Messung einer Fortbewegungsgeschwindigkeit des Fahrzeugs (10), wobei die Fortbewegungsgeschwindigkeit (V) des Fahrzeugs (10) mittels eines Sensors (36) zum Messen der Fortbewegungsgeschwindigkeit des Fahrzeugs erlangt wird, wobei der Sensor zum Messen (36) ein Satelliten-Positionsbestimmungssensor ist,
- Berechnen einer Drehzahl des Traktionselektromotors (14) in Abhängigkeit von der Fortbewegungsgeschwindigkeit des Fahrzeugs (10).

2. Verfahren nach dem Anspruch 1, wobei das Fahrzeug (10) Räder aufweist, wobei der Traktionsmotor (14) dazu eingerichtet ist, mindestens ein Rad drehanzutreiben, und wobei die Berechnung der Drehzahl des Traktionsmotors (14) von der Fortbewegungsgeschwindigkeit (V) des Fahrzeugs (10), einem Durchmesser des Rads, welches dazu eingerichtet ist, durch den Traktionsmotor (14) drehangetrieben zu werden, und einem Übertragungsverhältnis zwischen der Geschwindigkeit des Motors (14) und der Geschwindigkeit des Rads abhängig ist.

3. System zur Steuerung von mindestens einem Traktionselektromotor (14), aufweisend

- eine elektronische Steuervorrichtung (22),
- eine elektronische Vorrichtung zur Berechnung (20) einer Geschwindigkeit, und

einen Sensors (36) zum Messen der Fortbewegungsgeschwindigkeit eines Fahrzeugs, wobei die elektronische Steuervorrichtung (22) für die Steuerung von mindestens einem Traktionselektromotor (14) eingerichtet ist, wobei jeder Traktionselektromotor (14) in einem Fahrzeug (10), wie insbesondere einem Schienenfahrzeug, untergebracht ist, wobei die elektronische Steuervorrichtung (22) mit der elektronischen Vorrichtung (20) zur Berechnung einer Drehzahl von mindestens einem Traktionselektromotor (14) verbunden ist, wobei die elektronische Vorrichtung zur Berechnung (20) aufweist:

+ ein Erfassungsmodul (28), welches dazu eingerichtet ist, eine Fortbewegungsgeschwindigkeit des Fahrzeugs (10) zu erlangen, wobei die Fortbewegungsgeschwindigkeit (V) des Fahrzeugs (10) mittels des Sensors (36) zum Messen der Fortbewegungsgeschwindigkeit des Fahrzeugs erlangt wird, wobei der Sensor zum Messen (36) ein Satelliten-Positionsbestimmungssensor ist, und
+ ein Berechnungsmodul (30), welches dazu eingerichtet ist, eine Drehzahl des Traktionselektromotors (14) in Abhängigkeit von der Fortbewegungsgeschwindigkeit (V) des Fahrzeugs (10) zu berechnen,

wobei die elektronische Steuervorrichtung (22) aufweist:

- ein Empfangsmodul (32), welches dazu eingerichtet ist, von Seiten der elektronischen Vorrichtung zur Berechnung (20) eine Drehzahl des Traktionselektromotors (14) zu empfangen, und
- ein Erzeugungsmodul (34), welches dazu eingerichtet ist, einen Anfangswerts bei einem Zurücksetzen der Steuerung des Motors (14) ausgehend von der durch die elektronische Vorrichtung zur Berechnung (20) berechneten Drehzahl des Traktionselektromotors (14) zu erzeugen.

4. Antriebsstrang (12) für ein Fahrzeug (10), wie insbesondere ein Schienenfahrzeug, wobei der Antriebsstrang (12) aufweist:

- mindestens einen Traktionselektromotor (14), welcher im Fahrzeug (10) untergebracht ist, und

das System gemäß dem Anspruch 3.

5. Fahrzeug (10), wie insbesondere ein rollendes Fahrzeug, beispielsweise ein Schienenfahrzeug, welches einen Antriebsstrang (12) gemäß dem Anspruch 4 aufweist.

6. Computerprogramm, welches Softwarebefehle aufweist, welche, bei ihrer Ausführung durch das System gemäß dem Anspruch 3, ein Verfahren gemäß einem der Ansprüche 1 oder 2 durchführen.

**Claims**

1. A control method for controlling at least one electric traction motor (14), each electric traction motor (14) being on board a vehicle (10), such as a railway vehicle,
the control method being implemented by an electronic control device (22) and including a step for generating an initial value during a reset of the control of the motor from the rotation speed of the electric traction motor (14) calculated according to a calculation method for calculating a rotation speed of at least one electric traction motor (14), the calculation method being implemented by an electronic calculation device (20) and including the following steps:

- acquiring (100) a measurement of a movement speed of the vehicle (10), the movement speed (V) of the vehicle (10) being acquired via a measurement sensor (36) for measuring the movement speed of said vehicle, the measurement sensor (36) being a satellite geolocation sensor;
- calculating (110) the rotation speed of the electric traction motor (14) as a function of the movement speed of the vehicle (10).

2. The method according to claim 1, wherein the vehicle (10) includes wheels, and the traction motor (14) is configured to rotate at least one wheel, and wherein the calculation of the rotation speed of the traction motor (14) is as a function of the movement speed (V) of the vehicle (10), of a diameter of the wheel able to be rotated by said traction motor (14), and of a transmission ratio between the speed of the motor (14) and the speed of the wheel.

3. A control system for controlling at least one electric traction motor, comprising:

- an electronic control device (22);
- an electronic calculation device (20) for calculating a speed; and
- a measurement sensor (36) for measuring a movement speed of a vehicle;

the electronic control device (22) being configured to control at least one electric traction motor (14), each electric traction motor (14) being on board a vehicle (10), such as a railway vehicle, the electronic control device (22) being connected to the electronic calculation device (20) for calculating a rotation speed of at least one traction motor (14), the electronic calculation device (20) comprising :

+ an acquisition module (28) configured to acquire the movement speed of the vehicle (10), the movement speed (V) of the vehicle (10) being acquired via the measurement sensor (36) for measuring the movement speed of a vehicle, the measurement sensor (36) being a satellite geolocation sensor; and
+ a calculation module (30) configured to calculate a rotation speed of the electric traction motor (14) as a function of the movement speed (V) of the vehicle (10);

the electronic control device (22) comprising :

- a receiving module (32) configured to receive, from the electronic calculation device (20), a rotation speed of the electric traction motor (14); and
- a generating module (34) configured to generate an initial value during a reset of the control of the motor (14) from said rotation speed of the electric traction motor (14), calculated by the electronic calculation device (20).

4. A traction chain (12) for a vehicle (10), such as a railway vehicle, the traction chain (12) comprising:

- at least one electric traction motor (14) on board a vehicle (10), and
- the system according to claim 3.

5. A vehicle (10), such as a rolling vehicle, for example a railway vehicle, comprising a traction chain (12) according to claim 4.

6. A computer program comprising software instructions which, when executed by a system according to claim 3, carry out a method according to any one of claims 1 or 2.

## FIG.1
(ART ANTERIEUR)

## FIG.2

EP 3 599 468 B1

Acquisition d'une mesure d'une vitesse de déplacement du véhicule — 100

Calcul d'une vitesse de rotation du moteur de traction — 110

**FIG.5**

**FIG.3**

M4 — 14, M3 — 14, M2 — 14, M1 — 14
CM4 — 18, CM3 — 18, CM2 — 18, CM1 — 18
22, 20, 36, 12, 31, 35, 10

**FIG.4**

M4, M3, M2, M1
CM4, CM3, CM2, CM1
22, 20, 31, 35, 10, 38

## RÉFÉRENCES CITÉES DANS LA DESCRIPTION

**Documents brevets cités dans la description**

- JP S56107707 A

- US 2004122616 A1

**Littérature non-brevet citée dans la description**

- Automatic restarting methods of electric forklifts in the free running state. *EVS 27 International Battery, Hybrid and Fuel Cell Electric Vehicle Symposium,* 2013

- **PARK.** *Automatic restarting methods of electric forklifts in the free running state*